# FASCICULE DE BREVET EUROPEEN

(11) **EP 1 705 601 B1**
(45) Date de publication et mention de la délivrance du brevet: **10.02.2010**
(21) Numéro de dépôt: 06111390.8
(22) Date de dépôt: 20.03.2006
(51) Int. Cl.: G06K 7/00, G06K 19/07

(54) **Methode et dispositif de demodulation a deux niveaux**
Verfahren und Vorrichtung zur Demodulation in zwei Stufen
Two-level demodulation method and device

(30) Priorité: 21.03.2005 FR 0550726
(43) Date de publication de la demande: 27.09.2006
(73) Titulaire: COMMISSARIAT A L'ENERGIE ATOMIQUE, 75015 Paris (FR)
(72) Inventeur: Robert, Gérard, Poisat 38320 (FR); Dehmas, François, Meylan 38240 (FR); Crochon, Elisabeth, Poisat 38320 (FR); Reverdy, Jacques, Crolles 38920 (FR)
(74) Mandataire: Poulin, Gérard

(56) Documents cités:
- FR-A- 2 747 253
- FR-A- 2 776 781
- FR-A- 2 859 842
- GB-A- 2 379 845

## Description

### DOMAINE TECHNIQUE ET ART ANTÉRIEUR

L'invention concerne les techniques d'échanges d'informations entre une station fixe (lecteur) et un transpondeur sans contact (carte, étiquette) placé dans le champ électromagnétique émis par le lecteur.

Plus précisément, l'invention concerne une méthode de démodulation dans le transpondeur de la modulation émise par le lecteur.

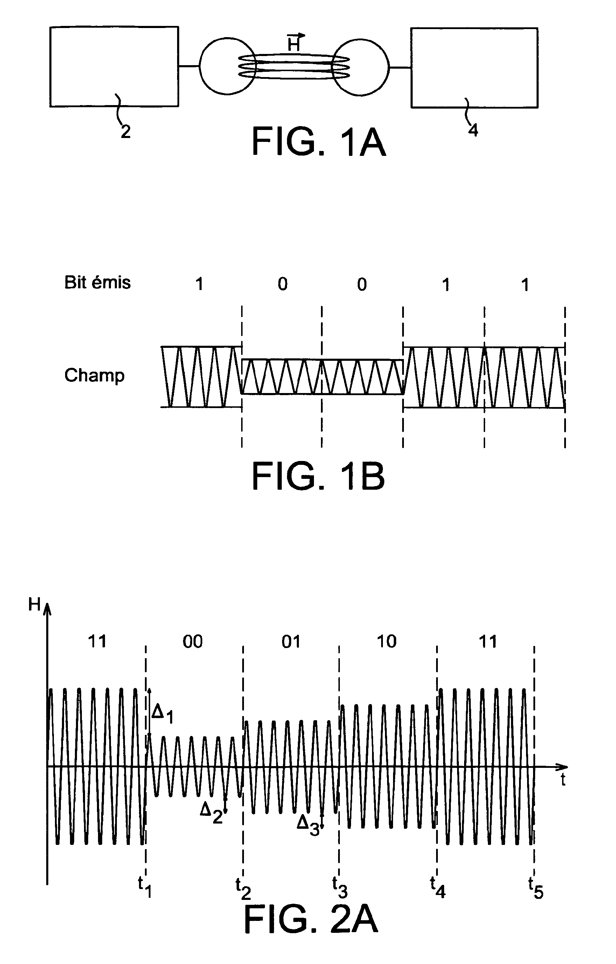

Comme illustré sur la figure 1A, un lecteur 2 émet un champ magnétique radio fréquence, ce champ est utilisé d'une part par un transpondeur 4 pour créer sa tension d'alimentation et d'autre part pour échanger des informations. Classiquement, le lecteur 2 envoie ses informations en modulant en amplitude ce champ magnétique (Amplitude Shift Keying ou ASK).

La figure 1B représente le champ émis par une station fixe en fonction de la valeur du bit qu'elle souhaite transmettre.

Pour augmenter le débit d'informations échangées entre la station fixe 2 et le transpondeur 4, on peut soit augmenter la fréquence du signal modulant soit augmenter le nombre de niveaux d'amplitude de modulation.

Dans la demande de brevet n° FR 2859842, est décrite une méthode de démodulation multi-niveaux mettant en oeuvre un convertisseur analogique numérique à un bit avec une forte résolution temporelle.

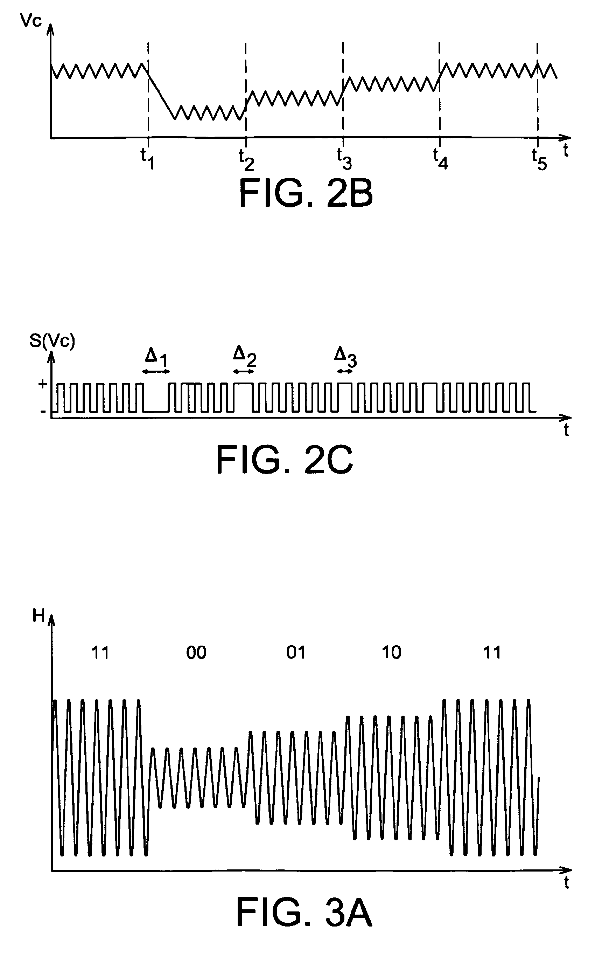

Les figures 2A - 2C rappellent sommairement le fonctionnement de ce convertisseur 1 bit décrit dans ce document n°FR 2859842. Sur ces figures:
- H représente le champ modulé par le lecteur (figure 2A),
- V_{c} est la tension de commande fournie par l'intégrateur du transpondeur 4 (figure 2B), l'amplitude de cette tension est représentative du niveau de l'amplitude du champ magnétique H, et donc des données à transmettre ;
- S(V_{c}) est le signe de la variation de la tension de commande V_{c} d'une boucle de régulation du transpondeur (figure 2C).
   Le signal signe S(V_{c}) est le signal exploité pour retrouver l'information émise par la station fixe 2.
   Dans cette méthode on utilise le sens de variation de la tension d'asservissement d'un convertisseur analogique/digital (démodulateur du transpondeur 4) pour connaître le niveau de la modulation.
   Dans le cas d'une modulation à deux niveaux, se pose le problème de trouver un procédé de démodulation permettant de remonter simplement à l'information initiale.

### EXPOSÉ DE L'INVENTION

L'invention propose une méthode pour démoduler ce signal, dans le cas où le nombre de niveaux N est égal à 2.

L'invention concerne d'abord un procédé de démodulation d'une information émise par modulation d'amplitude à deux niveaux par un lecteur vers un transpondeur, comportant, après chaque symbole, une étape pour déterminer si ce symbole est identique ou différent du symbole précédent.

Selon l'invention, on met en oeuvre le fait qu'il n'y a que deux niveaux possibles : pendant le temps symbole, soit l'asservissement a changé, soit il n'a pas changé. Ce changement se détecte à travers la durée de maintien du sens de variation.

En outre, il peut y avoir comparaison, à une valeur seuil, de la durée du maintien du signe de variation d'une tension d'asservissement du transpondeur.

L'invention concerne donc également un procédé et un dispositif dans lequel il y a comparaison, à une valeur seuil, de la durée du maintien du signe de variation d'une tension d'asservissement du transpondeur.

L'invention concerne également un dispositif de démodulation d'une information émise par modulation d'amplitude à deux niveaux par un lecteur vers un transpondeur, comportant des moyens pour déterminer, après chaque symbole, si ce symbole est identique ou différent du symbole précédent.

Selon un mode de réalisation, des moyens permettent de comparer, à une valeur seuil, la durée du maintien du signe de variation d'une tension d'asservissement du transpondeur.

Des moyens peuvent être prévus pour former antenne, ainsi que des moyens d'impédance de charge aux bornes de l'antenne, et des moyens formant boucle de régulation d'une tension aux bornes de l'impédance de charge.

Des moyens formant régulation comportent des moyens de redressement de la tension aux bornes de l'antenne, et des moyens de commande pour modifier l'impédance en fonction de la sortie des moyens de redressement.

Des moyens de démodulation peuvent en outre comporter des moyens de conversion analogique - numérique, entre les moyens de commande et les moyens de redressement.

### BREVE DESCRIPTION DES FIGURES

- Les figures 1A et 1B représentent un système lecteur-transpondeur, ainsi que le champ émis par une station fixe en fonction de la valeur du bit qu'elle souhaite transmettre,
- les figures 2A - 2C illustrent une technique de démodulation,
- les figures 3A et 3B illustrent une suite de symboles et des niveaux de modulation correspondants,
- la figure 4 représente un dispositif selon l'invention,
- les figures 5 et 6 représentent des exemples de fonctionnement en deux niveaux selon l'invention,
- la figure 7 représente une réalisation d'un dispositif selon l'invention.

### EXPOSÉ DÉTAILLÉ DE MODES DE RÉALISATION PARTICULIERS

Pour plus de clarté, on précise qu'on utilise le vocabulaire suivant :
- les symboles utilisés : ils sont en nombre lié au nombre de bits émis simultanément par la station de base 2 (figure 1A) ; si ce nombre de bits est N, il faut 2^{N} symboles différents.
- le niveau de modulation est la valeur crête du champ électromagnétique émis par le lecteur 2. Il faut au minimum autant de niveaux de modulation que de symboles différents. Le niveau de modulation est codé de (2^{N} -1) à 0.
- le durée d'un symbole est le temps de transfert d'un symbole entre le lecteur et le transpondeur.

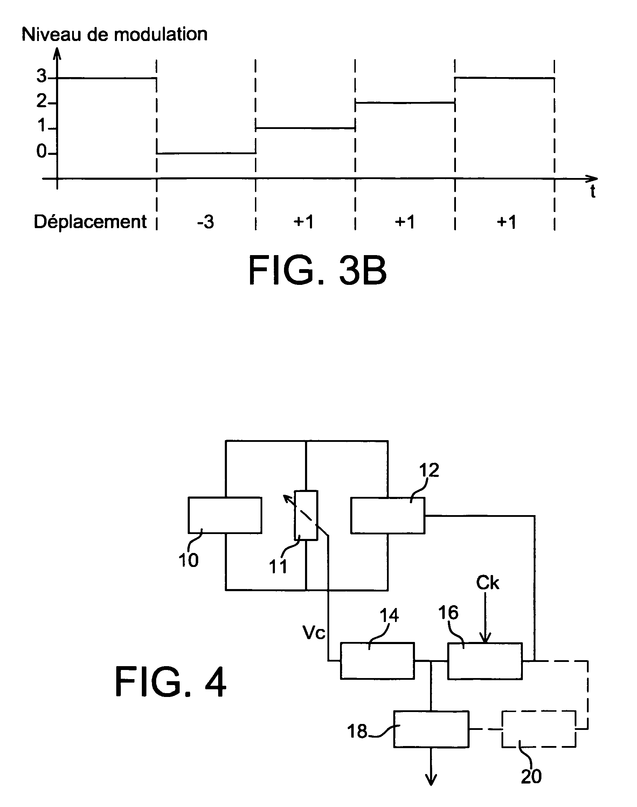

Les figures 3A et 3B illustrent ces rappels pour un symbole constitué de 2 bits ; on utilise alors 4 niveaux différents de modulation.

Dans le cas où le nombre de bits par symbole est 1, 2 niveaux de modulation suffisent.

Dans ce cas aucune contrainte n'existe sur la vitesse de commande de la boucle de régulation du transpondeur, car il n'est pas indispensable que la boucle de régulation ait atteint la valeur de consigne contrairement au cas où le nombre de bits par symbole est supérieur à 1.

A la fin d'un temps symbole, on a 2 cas possibles :
a) le symbole au temps t(n+1) est différent du symbole au temps t(n) : dans ce cas la boucle de régulation de tension agit, le signe de la variation de cette boucle est stable pendant un temps θ et la durée d'une séquence signe identique est supérieure à une valeur seuil ; par exemple 500 ns ou bien :
b) le symbole au temps t(n+1) est égal au symbole au temps t(n) : soit la boucle de régulation de tension a atteint l'équilibre pendant le symbole Tn et il y a une alternance de séquences de 0 et de 1 de durée inférieure au seuil, soit la boucle continue à agir et la séquence signe en cours pendant Tn se prolonge (par exemple 500 ms).

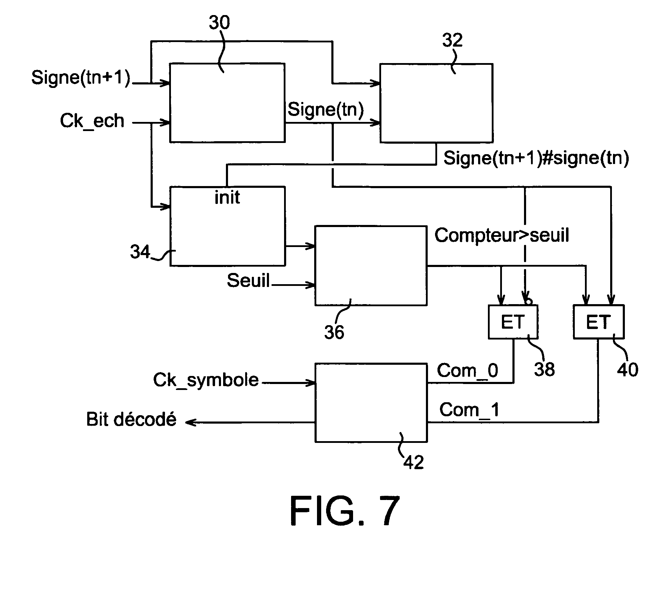

Un procédé selon l'invention peut être implémenté dans un transpondeur de manière numérique, par exemple à l'aide d'un microprocesseur qui traite les signaux reçus, ou d'une électronique dédiée telle que celle de la figure 7.

La figure 4 représente une partie du dispositif 4 transpondeur, comportant des moyens 10 formant antenne de réception, des moyens 12 formant circuit de redressement, des moyens 16 formant convertisseur analogique-numérique, et des moyens 14 de commande.

Ces derniers produisent une tension de commande d'une impédance de charge 11.

Un circuit 18 de traitement numérique fournit des signaux numériques représentatifs des données transmises.

Le convertisseur 16 à n bits est situé dans la boucle de régulation, entre les moyens 12 de redressement et les moyens 14 de commande. Le convertisseur 16 est, de préférence, un convertisseur à un bit (n=1), qui peut comporter un simple comparateur. Une très faible résolution est ainsi obtenue, qui permet de réduire au minimum le nombre de composants, et qui est compensée par une forte résolution dans le temps, obtenue en cadençant le convertisseur 16 une fréquence de sur-échantillonnage très supérieure à la fréquence des données transmises par la station fixe 2.

La fréquence de sur-échantillonnage est par exemple déterminée par un circuit d'horloge fournissant des signaux d'horloge Cₖ à une entrée de cadencement du convertisseur 16. A titre d'exemple, pour une fréquence de données de l'ordre de 200kHz, la fréquence de sur-échantillonage peut avantageusement être comprise entre 10 et 20MHz.

Bien que les signaux numériques de sortie du convertisseur 16 contiennent les informations nécessaires à la récupération des données transmises par la station fixe 2, ces signaux numériques ne sont pas directement exploitables.

La sortie du convertisseur 16, connectée au circuit de commande 14, est donc connectée à l'entrée d'un circuit de traitement numérique 18 destiné à fournir, sur 1 bit, les données démodulées.

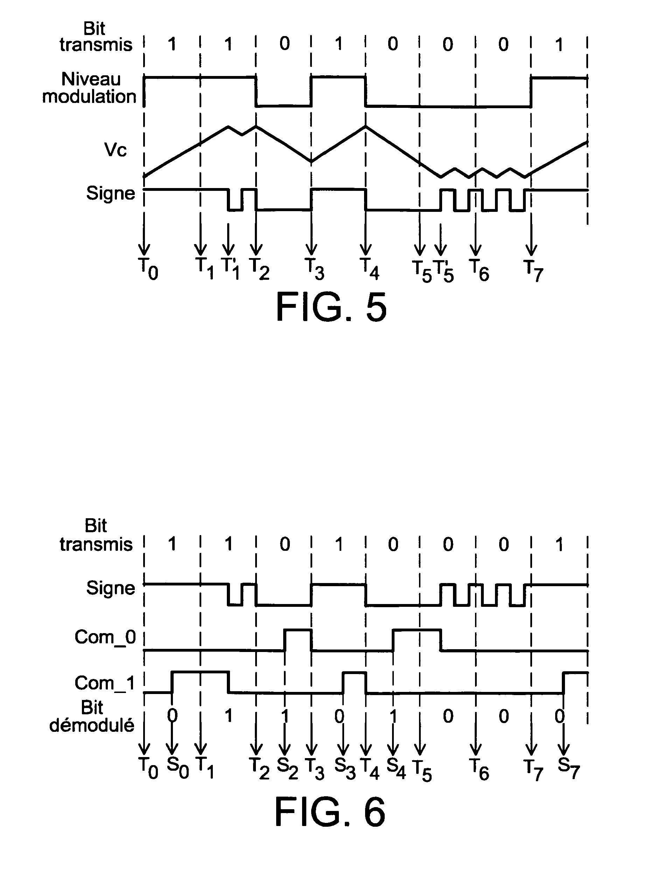

Le fonctionnement du circuit de démodulation de l'objet portatif de la figure 4, est illustré par les signaux représenté sur la figure 5 dans le cas où le convertisseur analogique-numérique 16, basse résolution, inclus dans la boucle de régulation de la tension alternative Vac aux bornes de l'antenne 10, est constitué par un simple comparateur fournissant une suite de bits à la fréquence de sur-échantillonage. Le circuit de commande 14 comporte un intégrateur fournissant un signal de tension analogique Vc représentatif du signal de sortie, à 1 bit, du convertisseur 16.

Le signal numérique de sortie du convertisseur 16 contient donc une information représentative du signe et de l'amplitude de la variation du niveau de la fem générée par le champ H, autrement dit une information représentative de la dérivée de l'enveloppe de la force électromotrice ou du champ magnétique. Le circuit de traitement numérique 18 comporte donc au moins une fonction d'analyse de la valeur et du signe de la dérivée et un système de détermination de la valeur du symbole.

Ainsi, la boucle de régulation de la figure 4 assure simultanément une partie de la conversion analogique, ce qui rend l'ensemble plus compact. De plus l'effet de variations lentes éventuelles du niveau de champ magnétique moyen, dues à un mouvement de l'objet portatif 1, est atténué par le fait que l'information de sortie du convertisseur 16 est représentative de la dérivée de l'enveloppe du champ magnétique. Les variations lentes du niveau de champ moyen sont donc traitées comme du bruit et ne perturbent pas la démodulation.

A l'aide de la figure 5, on va décrire un exemple de fonctionnement d'un procédé selon l'invention. Sur cette figure sont représentés les symboles transmis, la tension de correction V_{c}, et le signal signe, qui traduit les variations de V_{c} pour un système fonctionnant avec un temps de régulation de la boucle supérieur au temps symbole.

A T₀ : la station 2 émet un bit à 1, la boucle de régulation (tension V_{c}) du transpondeur 4 cherche à atteindre le niveau de modulation 1.

T₁ représente la fin du symbole ; la boucle de régulation n'a pas atteint le niveau 1, il n'y a pas de changement de niveau et donc pas de changement de sens de régulation.

A l'instant T'₁, le niveau 1 est atteint ; la boucle régule autour de ce niveau et change régulièrement de sens.

A T₂, il y a commande d'un bit à 0, et la boucle cherche à atteindre le niveau 0.

A T₃ il y a commande d'un bit à 1 ; la boucle, bien que n'ayant pas atteint le niveau 0, cherche à atteindre le niveau 1.

A T₄, se produit la commande d'un bit à 0, la boucle, bien que n'ayant pas atteint le niveau 1, cherche à atteindre le niveau 0.

En T₅ se produit la commande d'un bit à 0, la boucle du transpondeur 4 cherche à atteindre le niveau 0.

En T'₅, le niveau 0 est atteint ; la boucle régule autour de ce niveau et change régulièrement de sens.

T₆ représente la fin du symbole, le symbole suivant est identique et la boucle continue de réguler autour du niveau 0.

En T₇, il y a commande d'un bit à 1, et la boucle cherche à atteindre le niveau 1.

La figure 6 illustre le fonctionnement du système suivant l'invention.

La durée d'un symbole est le temps compris entre tₙ et tₙ₊₁, les instants Si figurent les instants où la longueur d'une chaîne consécutive de bit signe identique est supérieure au seuil de détection.

Com_0, respectivement com_1, signale que la longueur d'une chaîne de « 0 », respectivement de « 1 », est supérieur à ce seuil.

La valeur du seuil de détection est déterminée par la longueur de la chaîne maximum de bits signes consécutifs identiques lorsque la tension de commande est asservie autour de la valeur de consigne donnée par l'amplitude du champ.

Par exemple, l'alternance de chaîne de « 0 » et de « 1 » est au voisinage du temps T6, la longueur maximale d'une chaîne lorsque la tension de commande est asservie est de 5, et le seuil de détection peut être fixé à 7, ce qui donne une marge de bruit confortable et un bon résultat de démodulation.

La valeur du bit démodulé n'est mise à jour qu'à la fin de chaque période symbole, donc la valeur du bit démodulé entre Tₙ et Tₙ₊₁ correspond à la valeur du bit transmis par le lecteur entre Tₙ₋₁ et Tₙ.

Au temps To, le lecteur émet un bit à 1 (on suppose qu'à To_1 le bit était à 0), le bit signé passe à 1 jusqu'à ce que la tension de commande atteigne la valeur de consigne.

A l'instant So, la longueur de la chaîne de 1 atteint le seuil de détection, donc com_1 indique que le lecteur a émis un « 1 » à partir de T₀, alors que le symbole précédent était « 0 ».

A partir de T₁, le lecteur envoie un « 1 » ; la tension de commande continue à chercher à atteindre la tension de consigne ; com_1 reste activé jusqu'à l'équilibre entre tension de commande et consigne.

A l'instant T₂, il y a émission, par le lecteur, d'un « 0 » : le bit signe s'inverse et, en S2, com_0 indiquant qu'on a reçu une longueur de chaîne de « 0 » supérieure au seuil de détection, est activé.

A l'instant T₃, il y a émission, par le lecteur, d'un « 1 », le bit signe s'inverse et, en S3, com_1 indique qu'on a reçu une chaîne de « 1 » supérieure au seuil.

A l'instant T₄, le lecteur émet un « 0 » et en S4, com_0 indique la réception d'une chaîne de « 0 » supérieure au seuil.

A l'instant T₅, il y a émission, par lecteur, d'un « 0 », com_0 reste positionné jusqu'à ce que la tension de commande soit asservie à la tension de consigne.

A l'instant T6, le lecteur émet un « 0 », aucune chaîne de bit signe identique, supérieure à la valeur du seuil, n'est détectée, com_0 = com_1 = 0 signalent qu'on a pas détecté de changement de bit par rapport au symbole précédent.

Au final, on retrouve bien en bas de la figure 6 la série de symboles du haut de la figure 5 : 1 1 0 1 0 0 0. La méthode de démodulation proposée pour une modulation à deux niveaux fonctionne donc bien.

Selon l'invention le ralentissement de la boucle de régulation permet d'avoir une démodulation efficace avec un très bon rapport signal à bruit. Un tel ralentissement n'est pas problématique puisque, comme déjà dit ci-dessus, dans le cas d'un symbole de 1 bit, la contrainte sur la vitesse de régulation n'existe pas. Par exemple le temps de récupération de la boucle de régulation peut être supérieur au temps symbole.

La démodulation numérique proposée permet d'utiliser efficacement la sortie d'un convertisseur sigma delta 20, positionné comme illustré sur la figure 4 (entre l'entrée du convertisseur 16 et une entrée du circuit de traitement numérique 18). Ce convertisseur permet d'augmenter la résolution de la démodulation en diminuant l'influence du bruit de quantification généré par le convertisseur 16.

La figure 7 présente un exemple de réalisation du bloc numérique 18 pour une démodulation suivant l'invention.

Il est composé :
- d'un bloc ou de moyens 30 de mémorisation, par exemple un registre, du bit signe,
- d'un bloc ou de moyens 32 de comparaison, par exemple un « ou exclusif », indiquant les changements du bit signe ;
- de moyens 34 de comptage ou d'un compteur de longueur de chaîne « signe identiques ». Ce compteur est réinitialisé à chaque transition du signal signe ;
- de moyens 36 de comparaison, ou d'un comparateur, indiquant que la valeur du compteur est supérieure à la valeur de consigne ;
- de deux blocs ou de moyens 38, 40 de décodage ET, com_0 et com_1, tels que :
   - com_0 = 1 si compteur > seuil et signe (tₙ) = 0
   - com_1 = 1 si compteur > seuil et signe (tₙ) = 1.
- d'un bloc ou de moyens 42 de décodage des signaux com-0 et com-1 pour déterminer la valeur du bit décodé.

Le bloc 42 de décodage fonctionne à la fréquence symbole (ck-symbole), tous les autres blocs à la fréquence de sur-échantillonnage (ck-ech).

Le bloc 42 de décodage fonctionne de la manière suivante :
- com_0 = 1 → bit reçu = 0
- com_1 = 1 → bit reçu = 1
- com_0 = com_1 → bit reçu identique au bit précédent.

Un système selon l'invention a été réalisé, avec une durée symbole respectivement de 9,44 µs, 4,72 µs, 2,36 µs et 1,18 µs et un bit par symbole (soit 2 niveaux). Une transmission efficace et simple a été obtenue à respectivement, 106, 212, 424 et 847 Kbits/S.

## Revendications

1. Procédé de démodulation d'une information émise par modulation d'amplitude à deux niveaux par un lecteur (2) vers un transpondeur (4), dans lequel un changement de niveau de modulation est détecté en vérifiant, pour chaque symbole, la durée du maintien du signe de variation d'une tension d'asservissement du transpondeur (4).

2. Procédé selon la revendication 1, dans lequel la durée du maintien du signe de variation d'une tension d'asservissement du transpondeur (4) est comparée à une valeur seuil.

3. Procédé selon l'une des revendications précédentes, comportant, après chaque symbole, une étape pour déterminer si ce symbole est identique ou différent du symbole précédent.

4. Procédé selon l'une des revendications précédentes, dans lequel la valeur de chaque symbole est déterminée en utilisant une séquence de bits de signe dont la fréquence correspond à une fréquence de sur-échantillonnage supérieure à la fréquence de l'information transmise par le lecteur (2).

5. Procédé selon les revendications 2, 3 et 4, dans lequel, lorsque la séquence de bits de signe, pour un symbole, est une alternance de bits de valeur « 0 » et « 1 » pendant une durée inférieure à la valeur seuil, alors la valeur de ce symbole est égale à la valeur du symbole précédent.

6. Procédé selon les revendications 2, 3 et 4 ou selon la revendication 5, dans lequel, lorsque la séquence de bits de signe, pour un symbole, est une séquence de bits de valeur identique pendant une durée supérieure à la valeur seuil, alors la valeur de ce symbole est déterminée en fonction de la valeur desdits bits de la séquence.

7. Dispositif de démodulation d'une information émise par modulation d'amplitude à deux niveaux par un lecteur (2) vers un transpondeur (4), comportant des moyens pour détecter, pour chaque symbole, un changement de niveau de modulation en vérifiant la durée du maintien du signe de variation d'une tension d'asservissement du transpondeur (4).

8. Dispositif selon la revendication 7, comportant des moyens pour comparer, à une valeur seuil, la durée du maintien du signe de variation d'une tension d'asservissement du transpondeur (4).

9. Dispositif selon l'une des revendications 7 ou 8, comportant des moyens pour déterminer, après chaque symbole, si ce symbole est identique ou différent du symbole précédent.

10. Dispositif selon l'une des revendications 7 à 9, comportant en outre des moyens (10) formant antenne, des moyens (11) d'impédance de charge aux bornes de l'antenne, et des moyens (12, 16, 14) formant boucle de régulation d'une tension aux bornes de l'impédance de charge.

11. Dispositif selon la revendication 10, les moyens formant boucle de régulation comportant des moyens (12) de redressement de la tension aux bornes de l'antenne, et des moyens (14) de commande pour modifier l'impédance en fonction de la sortie des moyens (12) de redressement.

12. Dispositif selon la revendication 11, comportant en outre des moyens de démodulation comportant des moyens (16) de conversion analogique-numérique, entre les moyens de commande (14) et les moyens (12) de redressement.

13. Dispositif selon la revendication 12, dans lequel les moyens (16) de conversion analogique-numérique comportent un comparateur fournissant une suite de bits à une fréquence de sur-échantillonage, et les moyens de commande (14) comportent un intégrateur fournissant la tension aux bornes de l'impédance de charge.

14. Procédé de démodulation d'une information émise par modulation d'amplitude à deux niveaux par un lecteur (2) vers un transpondeur (4), comportant, pour chaque symbole reçu, une étape consistant à déterminer si le signe de variation d'une tension d'asservissement du transpondeur (4) a changé régulièrement, et :
- si non, et si le signe de variation de la tension d'asservissement du transpondeur est positif, alors la valeur du symbole reçu est égale à 1 ;
- si non, et si le signe de variation de la tension d'asservissement du transpondeur est négatif, alors la valeur du symbole reçu est égale à 0 ;
- si oui, et si le temps de maintien du signe de variation de la tension d'asservissement du transpondeur est inférieur à une valeur seuil, alors la valeur du symbole reçu est égale à la valeur d'un symbole précédent ;
- si oui, et si le temps de maintien du signe de variation de la tension d'asservissement du transpondeur est supérieur à la valeur seuil et si le signe de variation de la tension d'asservissement du transpondeur est négatif, alors la valeur du symbole reçu est égale à 0 ;
- si oui, et si le temps de maintien du signe de variation de la tension d'asservissement du transpondeur est supérieur à la valeur seuil et si le signe de variation de la tension d'asservissement du transpondeur est positif, alors la valeur du symbole reçu est égale à 1.

15. Dispositif de démodulation d'une information émise par modulation d'amplitude à deux niveaux par un lecteur (2) vers un transpondeur (4), comportant :
- des moyens de mémorisation (30) d'une bit de signe d'un symbole reçu ;
- des moyens (32) indiquant les changements du bit de signe ;
- des moyens de comptage (34) de longueur de chaîne « signe identique » du bit de signe ;
- des moyens de comparaison (36) indiquant si la valeur du compteur est supérieure ou non à une valeur seuil ;
- des moyens de décodage (38, 40) com_0 et com_1 dont les valeurs sont déterminées telles que :
• com_0 = 1 si la valeur du compteur est supérieure à la valeur seuil et si la valeur du signe de bit est égale à 0 ;
• com_1 = 1 si la valeur du compteur est supérieure à la valeur seuil et si la valeur du signe de bit est égale à 1 ;
- des moyens de décodage (42) déterminant la valeur du symbole reçu selon les valeurs de com_0 et com_1 telle qui :
• si com_0 = 1, la valeur du symbole reçu est égale à 0 ;
• si com_1 = 1, la valeur du symbole reçu est égale à 1 ;
• si com_0 = com_1, la valeur du symbole reçu est égale à la valeur d'un symbole précédent.

## Claims

1. Method for demodulating information emitted by amplitude modulation with two levels by a reader (2) to a transponder (4), in which a change of modulation level is detected by checking, for each symbol, the hold time of the sign of the variation of a slaving voltage of the transponder (4).

2. Method according to claim 1, in which the hold time of the sign of the variation of a slaving voltage of the transponder (4) is compared with a threshold value.

3. Method according to any of the preceding claims, comprising, after each symbol, a step for determining if this symbol is the same or different from the previous symbol.

4. Method according to any of the preceding claims, in which the value of each symbol is determined using a sequence of sign bits whose frequency corresponds to an over sampling frequency higher than the frequency of information emitted by the reader (2).

5. Method according to claims 2, 3 and 4, in which, when the sequence of sign bits for one symbol is an alternation of sequences from "0" and "1" bits for a duration less than the threshold value, then the value of this symbol 1 is equal to the value of the previous symbol.

6. Method according to claims 2, 3 and 4, or claim 5, in which, when the sequence of sign bits for one symbol is a sequence of bits of identical values for a duration more than the threshold value, then the value of this symbol is determined according to the value of said bits of the sequence.

7. Device for demodulating information emitted by amplitude modulation with two levels by a reader (2) to a transponder (4), comprising means for detecting, for each symbol, a change of modulation level by checking the hold time of the sign of variation of a transponder (4) slaving voltage.

8. Device according to claim 7, comprising means for comparing the hold time of the sign of variation of the transponder (4) slaving voltage with a threshold value.

9. Device according to claim 7 or 8, comprising means for determining, after each symbol, if this symbol is the same or different from the previous symbol.

10. Device according to any of claims 7 to 9, further comprising means (10) forming an antenna, load impedance means (11) at the antenna terminals, and means (12, 16, 14) forming a voltage regulation loop at the terminals of the load impedance.

11. Device according to claim 10, the means forming a voltage regulation loop comprising rectification means (12) of the voltage at the antenna terminals, and control means (14) for modifying the impedance as a function of the output of the rectification means (12).

12. Device according to claim 11, further comprising demodulation means comprising analogue-digital conversion means (16) between the control means (14) and the rectification means (12).

13. Device according to claim 12, in which the analogue-digital conversion means (16) comprise a comparator providing a bits sequence at an over sampling frequency, and the control means (14) comprise an integrator outputting the voltage at the terminals of the load impedance.

14. Method for demodulating information emitted by amplitude modulation with two levels by a reader (2) to a transponder (4), comprising, for each received symbol, a step for determining if the sign of the variation of a slaving voltage of the transponder (4) has changed regularly, and :
• if not, and if the sign of the variation of the slaving voltage of the transponder is positive, then the value of the received symbol is equal to 1;
• if not, and if the sign of the variation of the slaving voltage of the transponder is negative, then the value of the received symbol is equal to 0;
• if yes, and if the hold time of the sign of the variation of the slaving voltage of the transponder is lower than a threshold value, then the value of the received symbol is equal to the value of a previous symbol;
• if yes, and if the hold time of the sign of the variation of the slaving voltage of the transponder is greater than the threshold value and if the sign of the variation of the slaving voltage of the transponder is negative, then the value of the received symbol is equal to 0;
• if yes, and if the hold time of the sign of the variation of the slaving voltage of the transponder is greater than the threshold value and if the sign of the variation of the slaving voltage of the transponder is positive, then the value of the received symbol is equal to 1.

15. Device for demodulating information emitted by amplitude modulation with two levels by a reader (2) to a transponder (4), comprising:
- means (30) for memorizing a sign bit of a received symbol;
- means (32) for indicating changes of the sign bit;
- sign bit "identical sign" string length counting means (34);
- comparator means (36) indicating if the value of the counter is greater or not than a threshold value;
- two decoding means (38, 40) com_0 and com_1 whose values are determined such that:
• com_0 = 1 if the value of the counter is greater than the threshold value and if the value of the sign bit is equal to 0;
• com_1 = 1 if the value of the counter is greater than the threshold value and if the value of the sign bit is equal to 1;
- decoding means (42) for determining the value of the received symbol according to the values of com_0 and com_1 such that:
• if com_0 = 1, the value of the received symbol is equal to 0;
• if com_1 = 1, the value of the received symbol is equal to 1;
• if com_0 = com_1, the value of the received symbol is equal to the value of a previous symbol.

## Patentansprüche

1. Verfahren zur Demodulation einer mittels zweistufiger Modulation von einem Lesegerät (2) zu einem Transponder (4) gesendeten information, bei dem ein Modulationspegel-Wechsel detektiert wird, indem für jedes Zeichen die Dauer der Aufrechterhaltung des Variationsvorzeichens einer Rückkopplungsspannung des Transponders (4) verifiziert wird.

2. Verfahren nach Anspruch 1, bei dem die Aufrechterhaltungsdauer des Variationsvorzeichens einer Rückkopplungsspannung des Transponders (4) mit einem Schwellenwert verglichen wird.

3. Verfahren nach einem der vorangehenden Ansprüche, das nach jedem Zeichen einen Schritt umfasst, in dem bestimmt wird, ob dieses Zeichen gleich dem vorhergehenden Zeichen ist oder ungleich ist.

4. Verfahren nach einem der vorangehenden Ansprüche, bei dem der Wert jedes Zeichens bestimmt wird, indem man eine Vorzeichenbit-Sequenz benutzt, deren Frequenz einer Abtastungsfrequenz entspricht, die höher ist als die Frequenz der durch das Lesegerät (2) übertragenen Information.

5. Verfahren nach den Ansprüchen 2, 3 und 4, bei dem, wenn während einer Dauer, die niedriger ist als der Schwellenwert, die Vorzeichenbit-Sequenz für ein Zeichen eine Wechselfolge von Bits des Werts "0" und "1" ist, der Wert dieses Zeichens dann gleich dem Wert des vorangehenden Zeichens ist.

6. Verfahren nach den Ansprüchen 2, 3 und 4 oder nach Anspruch 5, bei dem, wenn die Vorzeichenbit-Sequenz für ein Zeichen während einer Dauer größer als der Schwellenwert eine Sequenz von Bits identischen Werts ist, dann der Wert dieses Zeichens in Abhängigkeit von dem Wert der genannten Bits der Sequenz bestimmt wird.

7. Vorrichtung zur Demodulation einer mittels zweistufiger Modulation von einem Lesegerät (2) zu einem Transponder (4) gesendeten Information, die Einrichtungen umfasst, um - für jedes Zeichen - einen Modulationspegel-Wechsel zu detektieren, indem die Dauer der Aufrechterhaltung des Variationsvorzeichens einer Rückkopplungsspannung des Transponders (4) verifiziert wird.

8. Vorrichtung nach Anspruch 7 mit Einrichtungen, um die Aufrechterhaltungsdauer des Variationsvorzeichens einer Rückkopplungsspannung des Transponders (4) mit einem Schwellenwert zu vergleichen.

9. Vorrichtung nach einem der Ansprüchen 7 oder 8 mit Einrichtungen, um - nach jedem Zeichen - zu bestimmen, ob dieses Zeichen gleich dem vorhergehenden Zeichen ist oder ungleich ist.

10. Vorrichtung nach einem der Ansprüche 7 bis 9 mit außerdem Antennebildenden Einrichtungen (10), Lastimpedanzeinrichtungen (11) an den Antenneanschlüssen und einen Regelkreis einer Spannung an den Lastimpedanzanschlüssen bildenden Einrichtungen (12, 16, 14).

11. Vorrichtung nach Anspruch 10, wobei die einen Regelkreis bildenden Einrichtungen Gleichrichtereinrichtungen (12) der Spannung an den Antenneanschlüssen und Steuereinrichtungen (14) zum Modifizieren der Impedanz in Abhängigkeit von dem Ausgang der Gleichrichtereinrichtungen (12) umfassen.

12. Vorrichtung nach Anspruch 11 mit außerdem Analog-Digital-Wandlungseinrichtungen (16) umfassenden Demodulationseinrichtungen zwischen den Steuereinrichtungen (14) und den Gleichrichtereinrichtungen (12).

13. Vorrichtung nach Anspruch 12, bei dem die Analog-Digital-Wandlungseinrichtungen (16) einen eine Bitfolge mit einer Abtastfrequenz liefernden Zähler umfassen, und die Steuereinrichtungen (14) ein die Spannung an den Lastimpedanzanschlüssen lieferndes Integrierglied umfassen.

14. Verfahren zur Demodulation einer mittels zweistufiger Modulation von einem Lesegerät (2) zu einem Transponder (4) gesendeten Information, umfassend - für jedes empfangene Zeichen:
einen Schritt, darin bestehend, zu bestimmen, ob das Variationsvorzeichen einer Regelungspannung des Transponders (4) regelmäßig gewechselt hat, und:
- wenn nein, und wenn dabei das Variationsvorzeichen der Regelungsspannung positiv ist, dann der Wert des empfangenen Zeichens gleich 1 ist;
- wenn nein, und wenn dabei das Variationsvorzeichen der Regelungsspannung negativ ist, dann der Wert des empfangenen Zeichens gleich 0 ist;
- wenn ja, und wenn dabei die Aufrechterhaltungsdauer des Variationsvorzeichens der Regelspannung des Transponders kleiner als ein Schwellenwert ist, dann der Wert des empfangenen Zeichens gleich dem Wert eines vorangehenden Zeichens ist;
- wenn ja, und wenn dabei die Aufrechterhaltungsdauer des Variationsvorzeichens der Regelspannung des Transponders größer als ein Schwellenwert ist und wenn das Variationsvorzeichen der Regelungsspannung negativ ist, dann der Wert des empfangenen Zeichens gleich 0 ist;
- wenn ja, und wenn dabei die Aufrechterhaltungsdauer des Variationsvorzeichens der Regelspannung des Transponders größer als ein Schwellenwert ist und wenn das Variationsvorzeichen der Regelungsspannung positiv ist, dann der Wert des empfangenen Zeichens gleich 1 ist;

15. Vorrichtung zur Demodulation einer mittels zweistufiger Modulation von einem Lesegerät (2) zu einem Transponder (4) gesendeten Information, umfassend:
- Speichereinrichtungen (30) eines Vorzeichenbits eines empfangenen Zeichens;
- Angabeeinrichtungen (32) der Wechsel des Vorzeichenbits;
- Zähleinrichtungen (34) der Länge der "Identische-Vorzeichen"-Kette des Vorzeichenbits;
- Vergleichseinrichtungen (36), die angeben, ob der Wert des Zählers größer als ein Schwellenwert ist oder nicht;
- Einrichtungen (38, 40) zur Decodierung von com_0 und com_1, deren Werte folgendermaßen bestimmt werden:
• com_0 = 1, wenn der Wert des Zählers größer als der Schwellenwert ist und wenn der Wert des Bitvorzeichens gleich 0 ist;
• com_1 = 1, wenn der Wert des Zählers größer als der Schwellenwert ist und wenn der Wert des Bitvorzeichens gleich 1 ist;
- Decodiereinrichtungen (42) zur Bestimmung des Werts des empfangenen Zeichens gemäß den Werten von com_0 und com_1 wie folgt:
• wenn com_0 = 1, dann ist der Wert des empfangenen Zeichens gleich 0;
• wenn com_1 = 1, dann ist der Wert des empfangenen Zeichens gleich 1;
• wenn com_0 = com_1, dann ist der Wert des empfangenen Zeichens gleich dem Wert eines vorhergehenden Zeichens.
